# EUROPEAN PATENT APPLICATION

(11) **EP 4 578 922 A1**
(43) Date of publication of application: **02.07.2025**
(21) Application number: 23315492.1
(22) Date of filing: 27.12.2023
(51) Int. Cl.: C09J 7/38, B32B 7/12, H01M 50/00

(54) **ADHESIVE BONDING STACK AND SELF-ADHESIVE TAPE THEREFORE**

(71) Applicant: TESA SE, 22848 Norderstedt (DE)
(72) Inventor: FUSELLIER, Arnaud, 77240 Cesson (FR); KETTLING, Friederike, 22848 Norderstedt (DE); VON ALLWÖRDEN, Dörte, 22848 Norderstedt (DE)

(57) **Abstract**

In an adhesive bonding stack between a first substrate (2) and a second substrate (3), formed by a first adhesive layer (4), which is double-sidedly adhering and non-detachable, the first side of the first adhesive layer (4) being attached to the first substrate, wherein the adhesive bonding stack further comprises a self-adhesive product, which comprises a dimensionally stable layer (5) provided on the second side of the first adhesive layer (4), a pressure-sensitive adhesive layer (6) provided on a second side of the dimensionally stable layer (5), which is opposite to the first adhesive layer (4), the second side of the pressure-sensitive adhesive layer (6) being attached to the second substrate (3), the detachable adhesive layer (6) being an adhesive moiety detachable by stretching, rendering the adhesive bonding stack detachable, a previously non-detachable bond becomes internally divisible and thus detachable.

## Description

The invention relates to an adhesive bonding stack between a first substrate and a second substrate, formed by a first adhesive layer, which is double-sidedly adhering and non-detachable, the first side of the first adhesive layer being attached to the first substrate, as well as to a self-adhesive product for use in said adhesive bonding stack. Also disclosed is the use of the self-adhesive product and the adhesive bonding stack.

Adhesives and adhesive products such as adhesive tapes are generally used to assemble two substrates to produce a durable or permanent connection. The requirements for adhesives and products equipped with them have increased enormously in recent years. The focus is no longer just on pure adhesive performance, but also on other properties such as chemical resistance, barrier function against migrating substances or conductivity with regard to electrical current and/or thermal energy, whereby the latter is often also referred to as thermal conductivity.

Thermal conductivity is of increasing importance in this environment, particularly for applications of adhesives in electronic devices or components. It is often a question of dissipating the heat loss generated in a device. Traditionally, this is done via deflector plates, cooling surfaces, heat sinks or by means of active cooling measures using fans. This prevents excessive heating of such devices and in particular the thermally sensitive assemblies and components inside. The devices can then be operated in a permissible temperature range, in particular also in a temperature range that is favorable in terms of their efficiency. In addition, the devices are simply prevented from malfunctioning and failing due to overheating.

Conversely, in many cases a supply of heat is also necessary to ensure that the devices function properly. Known examples include the transfer of thermal energy between two objects such as a heating element and an object to be heated, for example a heated mirror or a thermal chuck, or the transfer of thermal energy from heated or cooled objects to a temperature sensor in order to enable process monitoring and control of the operation mode.

The aspect of thermal conductivity is, for example, important in accumulators, which generate a lot of heat during rapid charging and require cooling to function optimally when a large amount of power is drawn. Accumulators usually consist of several interconnected electrochemical packs, which in turn consist of individual cells connected to a cooling plate. The connection between the cells and the cooling plate can be provided by an adhesive tape. It goes without saying that this adhesive tape must not interrupt the heat flow, but rather promote it.

In the course of the current trend in the mobility sector towards increasing the proportion of electromobility, high-performance accumulators are becoming increasingly important economically. The accumulator is by far the most expensive component in an electric vehicle. Conventional accumulators are irreparably damaged at temperatures of around 65 °C and above. For this reason, manufacturers go to great lengths to prevent this and use cooling systems that are often even "over-sized" in order to minimize the likelihood of damage to the battery.

The most common rechargeable batteries currently in use are lithium-ion rechargeable batteries. Their electrodes become passivated over time, even during normal operation, which has a negative effect on the performance and capacity of the battery. However, the cells of these batteries are designed in such a way that the electrode passivation can be largely compensated for over the service life. This is usually achieved by using more lithium ions than are actually required in each cell from the outset.

Heating the lithium-ion batteries to higher temperatures would greatly increase the diffusion coefficient of the lithium ions during both the charging and discharging process. This means that the diffusion speed of the lithium ions increases, which can damage the separator layer of the cells. On the other hand, the electrodes become more passivated than in normal operation, resulting in a significant reduction in the performance or capacity of the cell. Even a single overheating can adversely affect the ion balance set for the cell because the previously calculated and applied amount of lithium ions no longer corresponds to the actual conditions at the electrodes.

Due to these processes, there is a great interest in efficiently dissipating heat released at the accumulators, so that this requirement also arises for adhesives installed in the accumulators or used specifically for the purpose of heat conduction. Thermally conductive adhesives or adhesive tapes are therefore known in the state of the art in many forms, which are used to attach a cooling plate to battery packs in order to lead off the heat generated by the batteries.

The problem with these thermally conductive adhesives is that they form a constant bond, i. e. the battery cells and the cooling plate are permanently and non-detachably fixed to each other. Currently, it is therefore not possible to detach battery cells from the cooling plate, once installed. Particularly due to the increasing regulations regarding recycling and re-using it is, however, of particular importance to be able to detach battery cells from the cooling plate, for example when they need to be replaced or repaired. Therefore, there is a need for a reliable debonding of the fixation of battery cells to the cooling in order to offer repairing, reusing and recycling of battery packs, especially in case of cell-to-pack designs.

It would therefore be highly desirable to provide an adhesive product which combines both, good adhesive properties as well as thermal conductivity on the one hand and detachability on the other. Moreover, the general concept of being able to combine properties of an adhesive which, however, itself is not suitable to act as a detachable adhesive, because e. g., the adhesive is a structural adhesive, particularly a liquid adhesive, with the characteristic of being detachable, would be highly useful in other areas as well.

In other applications including other applications in the automotive industry, trends have been apparent for some time already that are aimed at undoing such permanent connections for the purpose of recycling. Accordingly, adhesive solutions are sought that initially offer application-compatible bonding properties, and yet are also detachable. One of the major challenges here is to realize bonding performances that meet ever more demanding applications in relation, for example, to the materials to be bonded, but also to the robustness of the bond. For adhesive bonds in the automotive sector, for example, high thermal shear strengths are required.

Among adhesives liquid adhesives and adhesive pastes on one hand and self-adhesive products, also referred to as pressure-sensitive adhesive products, such as tapes and labels on the other are differentiated. While liquid adhesives and adhesive pastes are typically applied to a target surface in the liquid or paste-like state and cured, self-adhesives are permanently tacky at room temperature and do not undergo a change in physical and chemical nature before, during and after application to the target surface.

Self-adhesive products detachable by extensive stretching and comprising one or more layers are known. Some formulations useful for such products are based on styrene block copolymers. The compositions of these products differ depending upon the application and corresponding requirements. Examples for such products and the different types of adhesives and carrier layers used therefore can be found in US 4,024,312 A, DE 10 2012 223 670 A1, DE 100 03 318 A1, DE 102 52 088 A1 or DE 10 2007 021 504 A1. Other formulations are based on polyacrylates (see e. g. WO92/11333) or on silicone (see e. g. US 6,569,521 B1) For adhesive bonds in the automotive sector adhesive compositions with high thermal shear strengths are described in DE 10 2022 107 749 A1.

However, there are applications, in which none of the known pressure-sensitive adhesives provides the desired properties and adhesiveness. One such example are the aforementioned battery packs, particularly in automobiles. The bond is effected by a heat-conductive paste, which ensures that the generated heat from the batteries is reliably lead off. Unfortunately, this conductive paste is non-detachable. An example for such thermally conductive compositions can be found in EP 3 736 300 A1.

Many experiments have been made trying to combine the functions of thermal conductivity and detachability (see e. g. JP2017-132909 A1) while at the same time ensuring a sufficiently strong bond between the two components, however, to no avail. In other experiments, pressure-sensitive detachable adhesive layers providing for the desired detachability have been added to the functional adhesive layers. However, these experiments have failed as well, as components of the functional adhesive such as resins, plasticizer and antioxidants migrate into the pressure-sensitive adhesive and alter its properties and characteristics, in particular degrading its detachability.

In view of the aforesaid, it is therefore an object of the present invention to provide an adhesive bonding stack as well as an adhesive product that meet the requirements described above and which particularly combine the features (1) to reliably bond two substrates one of which particularly being a cooling plate and the other a battery pack or part(s) of it, (2) to provide heat dissipation properties and (3) to offer debondability.

As a solution to the technical problems described above, the present invention proposes an adhesive bonding stack as disclosed in claim 1, i. e. an adhesive bonding stack between a first substrate and a second substrate, formed by
- a first adhesive layer, which is double-sidedly adhering and non-detachable, the first side of the first adhesive layer being attached to the first substrate,
characterized in that the adhesive bonding stack further comprises a self-adhesive ' product which comprises
- a dimensionally stable layer provided on the second side of the first adhesive layer,
- a pressure-sensitive adhesive layer provided on a second side of the dimensionally stable layer, which is opposite to the first adhesive layer, the second side of the pressure-sensitive adhesive layer being attached to the second substrate, the pressure-sensitive adhesive layer being an adhesive moiety detachable by stretching,
rendering the adhesive bond detachable.

With this embodiment of the bond the previously non-detachable bond becomes internally divisible and thus detachable.

In order to provide an adhesive bonding stack according to the present invention, a self-adhesive product fulfilling all prerequisites is necessary. The present invention therefore also relates to a self-adhesive product, comprising
- a pressure-sensitive adhesive layer, which is double-sidedly adhering and detachable by stretching, and
- a dimensionally stable layer provided on a first side of the pressure-sensitive adhesive layer,
- optionally a temporary liner on the second side of the pressure-sensitive adhesive layer,
for use in the adhesive bonding stack according to the present invention.

A temporary liner ensures protection of the pressure-sensitive adhesive layer which would otherwise be open to environmental influences or could stick to a neighboring layer when being rolled up for transport or storage.

This temporary liner particularly is a film-like material from which the pressure-sensitive adhesive layer can be removed so that the remaining part of the pressure-sensitive adhesive layer can then be brought into contact with the substrate to be bonded or another material that is to form a bond with the remaining part of the pressure-sensitive adhesive layer.

The temporary liner is, in particular, a release paper or a release film, also known as a release liner, in any case a material that is not firmly bonded to the pressure-sensitive adhesive layer, which is, in particular, treated to be abhesive so that the pressure-sensitive adhesive layer can be removed from it. It is therefore an aid for its production, storage or for further processing.

In accordance with the general understanding, a pressure-sensitive adhesive is understood to be an adhesive that allows a permanent bond with almost all adhesive substrates even under relatively weak pressure and, if necessary, can be removed from the adhesive substrate after use with essentially no residue. A pressure-sensitive adhesive has a permanent tack at room temperature, i.e. it has a sufficiently low viscosity and a high tack so that it wets the surface of the respective adhesive base even at low pressure. The adhesiveness of the adhesive is based on its adhesive properties and the detachability on its cohesive properties.

According to the present invention, an adhesive is "non-detachable", when it is not detachable by stretching, i. e. when a force of more than 30 N/cm, particularly more than 15 N/cm, at an angle of 180° must be applied in order to pull off a respective adhesive tape, as described in "Test method 4 - Tear Resistance" below, or if, when applying such force, the tape tears.

On the other hand, an adhesive is "detachable", i. e "detachable by stretching", when a force of less than 30 N/cm, particularly less than 15 N/cm must be applied in the "Test method 4 - Tear Resistance", as described below, and the tape does not tear when applying such force.

The self-adhesive product according to the present invention can e. g. be attached to one of the two substrates, while the first adhesive, the non-detachable adhesive, is applied to the other substrate. This is especially the case, when the first adhesive layer results from a liquid adhesive or adhesive paste. The two substrates can then be assembled by attaching the first substrate with its first adhesive layer to the dimensionally stable layer provided on the pressure-sensitive adhesive layer on the second substrate.

However, it is also possible and a preferred embodiment that the self-adhesive product according to the invention further comprises a first adhesive layer provided on a first side of the dimensionally stable layer, which is opposite to the detachable adhesive layer, the first adhesive layer being non-detachable.

Surprisingly, it has been found that the dimensionally stable layer provided according to the invention can assume the part of a plain surface required to detach a stretchable pressure-sensitive adhesive layer. In common detachable self-adhesive products, the product is always applied to a plain surface, to which it adheres in the default state, but from which it detaches when being stretched. With the present invention, the debonding takes place within the self-adhesive product itself. The self-adhesive product is split with the first adhesive layer remaining on the surface it is fixed to. Thus, the debonding process is being decoupled from the substrate, because the dimensionally stable layer assumes the function of the substrate or the substrate surface, respectively.

The dimensionally stable layer also ensures that components of the functional adhesive such as resins, plasticizers or antioxidants do not migrate into the pressure-sensitive adhesive layer so that the stretchability of the pressure-sensitive adhesive layer is not impaired and that the latter does not deteriorate.

The dimensionally stable layer is therefore both, a barrier as well as the plain surface required for the debonding function of the detachable adhesive.

With the adhesive bonding stack according to the invention it now becomes possible to detachably fix battery packs to a cooling plate, thereby enabling repair, exchange, re-use and recycling of said battery packs. The same concept can be applied to many different other applications in which debonding is desired, but common detachable self-adhesive products cannot be applied, as they do not provide for the required additional features such as thermal conductivity. With the present invention the area of application of detachable products is noticeably expanded opening new fields and new possibilities.

In a preferred embodiment, the adhesive of the first adhesive layer is a functional adhesive, in particular an adhesive which is thermally conductive. Thus, the particular features of the functional adhesive can be combined with detachability, enabling bonds which could hitherto not be carried out in a detachable manner now being detachable.

In a further preferred embodiment, the adhesive of the first adhesive layer is curable adhesive composition, particularly a liquid glue. Liquid glues are of particular interest, when gaps, particularly uneven gaps are to be filled, as a liquid glue easily flows into a gap and penetrates into every available angle. With the present invention, it becomes possible to also make such bonds with liquid glues detachable.

Curable adhesives are adhesives which have not yet reached their maximum degree of crosslinking in the state intended for application and can be cured by external influences by initiating polymerization in the curable adhesive and thereby increasing the degree of crosslinking. This changes the mechanical properties of the now cured adhesive, particularly increasing viscosity, surface hardness and bonding strength.

Curable adhesives, also referred to as structural adhesives or reactive adhesives, are known in the prior art and can have very different compositions from a chemical point of view. What all curable adhesives have in common is that the crosslinking reaction can be triggered by external influencing factors, for example by the supply of energy, in particular by temperature, plasma or radiation curing, and/or contact with a substance that promotes polymerization, as is the case, for example, with moisture-curing adhesives. Exemplary adhesives are disclosed, for example, in DE 102015222028 A1, EP 3091059 A1, EP 3126402 B1, EP 2768919 B1, DE 102018203894 A1, WO 2017174303 A1 and US 4661542 A.

The dimensionally stable layer can consist of a variety of different materials. Any material that is dimensionally stable can be used. In the context of the present invention a material is "dimensionally stable" when its Young's modulus (modulus of elasticity) is greater than 0,5 GPa, preferably greater than 1 GPa, more preferably greater than 2,5 GPa. Possible materials include foils and films, particularly polymer films, metal foils, paper (coated or uncoated) and also fabrics. While fabrics may be suitable with respect to their Young's modulus due to their surface structure, which is usually of a higher roughness than that of paper, films or foils, fabrics may be less advantageous regarding the surface smoothness.

The higher the smoothness of the surface, the easier the detachable adhesiveness detaches, i. e. other materials may offer a better debonding than fabrics. Preferably, the surface of the dimensionally stable layer has an Area Roughness Parameter Sa (according to ISO 25178) of less than 50 µm, more preferably of less than 10 µm and particularly preferred of less than 5 µm. The maximum elongation of the dimensionally stable layer preferably is lower than 200 %, more preferably lower than 100 %.

In a further preferred embodiment, the dimensionally stable layer thus consists of at least one material selected from the group consisting of metal foils, particularly aluminum foil, copper foil, tin foil or lead foil, polypropylene, vinyl chloride resin, polystyrene, polyurethane, polyethylene terephthalate, acrylonitrile butadiene styrene, polycarbonate, polyvinyl chloride, ethylene vinyl acetate, polyester and paper, preferably selected from the group consisting of polypropylene, polyethylene terephthalate, polycarbonate and polyvinyl chloride. Said materials provide for a particularly plain surface which enables a smooth and complete debonding of the pressure-sensitive adhesive when being stretched. In additional all said materials show good barrier properties so that there is no migration from the functional adhesive into the stretchable first adhesive layer. Of all materials mentioned, polyethylene terephthalate (PET which has an Area Roughness Parameter Sa of 0,1 to 0,3 µm) is particularly suitable as dimensionally stable layer for the self-adhesive product according to the invention.

Metal foils are particularly preferred for applications requiring thermal conductivity. While the dimensionally stable layer as well as the detachable layer hinder or contravene the effect of thermal conductivity of the first adhesive layer this hinderance can be lowered when the dimensionally stable layer has thermally conductive properties as well.

Particularly preferable, the dimensionally stable layer has a thickness of between 10 and 150 µm. Moreover, it is preferred that the detachable adhesive layer has a thickness of between 100 and 500 µm. A total thickness of dimensionally stable layer and pressure-sensitive adhesive layer of between 110 and 650 µm is tolerable as it can still be assured that the functional properties of the first adhesive layer can still develop the desired effect. In case of the bond between a cooling plate and battery cells, the thermal conductivity of the self-adhesive product is still sufficient to effect the required thermal conduction of the heat generated within the battery cells.

The detachable adhesive layer may be a single stretchable adhesive layer. However, it may also have a more complex design and may consist of two stretchable adhesive layers separated by a carrier layer, the carrier layer being made of an extensible carrier material, wherein polyolefins, polyurethanes, polyester polyurethanes, polyether polyurethanes, polycaprolactone polyurethanes, or rubber-based materials are particularly preferred. In a further preferable embodiment, the carrier layer has a maximum elongation of more than 300 %, more preferable of more than 500 % and particularly preferable of more than 750 %.

For the adhesive of the pressure-sensitive adhesive layer adhesives detachable by stretching commonly known in the prior art may be used. Such adhesives may be based on acrylates, silicone or polyvinylaromatic polydiene block copolymer, particularly those with hydrogenated polydiene blocks. Particularly preferable, the adhesive is a pressure-sensitive adhesive composition comprising:
(a) at least 28% by weight and at most 60% by weight of an elastomer component, wherein
   i. the elastomer component contains at least 60% by weight and preferably at most 90% by weight, in each case based on the elastomer component, of at least one hydrogenated polyvinylaromatic-polydiene block copolymer with a polyvinyl aromatic content of at least 18% by weight and a peak molecular weight of 100,000 to 500,000 g/mol, determined according to GPC (Test I),
   ii. the polydiene blocks are substantially fully hydrogenated,
   iii. the hydrogenated polyvinylaromatic-polydiene block copolymer has an ABA structure, (AB)nZ structure with n = 2 or radial (AB)n structure or radial (AB)n-Z structure with n ≥ 3, wherein A = polyvinylaromatic, B = ethylene and butylene or ethylene and propylene and Z = derivative of a coupling substance and wherein the ethylene content in the B blocks is preferably at least 50% by weight, and
   iv. the elastomer component contains at least one type of hydrogenated diblock copolymer with an A'B' structure or (A'B')nZ structure with n = 1, where A' = polyvinylaromatic, B' = ethylene and butylene or ethylene and propylene, Z = derivative of a coupling substance and A' = A and B' = B,
(b) an adhesive resin component,
(c) optionally a plasticizer component,
(d) optionally but preferably at least 2.5% by weight to 22% by weight, preferably at least 4% by weight to 18% by weight, of a reinforcing component which is at least one resin with an MMAP value between -10°C and +30°C, preferably between 0°C and +20°C, and a softening point of at least 140°C,
(e) optionally further additives,
where the proportion of the elastomer component relates to the total weight of the pressure-sensitive adhesive composition.

In the context of the present invention, "substantially fully hydrogenated" means a degree of hydrogenation of at least 90%, preferably of at least 95% and particularly preferably of at least 99%. In the context of the present invention, hydrogenated block copolymers are understood to be those in which the polydiene blocks are substantially fully hydrogenated.

Examples of coupling substances that can be used according to the invention can be found, among others, in Holden (G. Holden, D. R. Hansen in "Thermoplastic Elastomers", G. Holden, H. R. Kricheldorf, R. P. Quirk (eds.), 3rd ed. 2004, C: Hanser, Munich, p. 49f), without wishing to be limited by this.

### a) Elastomer component

Thus, formulations are suitable according to the invention which contain at least 28% by weight and at most 60% by weight, preferably between 35% by weight and 58% by weight, very preferably between 40% by weight and 52% by weight, of an elastomer component, wherein the elastomer component is at least 60% by weight, preferably at least 70% by weight, of the elastomer component. % by weight, preferably at least 70 % by weight and very preferably at least 80 % by weight, and preferably at most 90 % by weight, based on the elastomer component, of at least one hydrogenated polyvinylaromatic-polydiene block copolymer.

The at least one hydrogenated polyvinylaromatic polydiene block copolymer used according to the invention is characterized by a linear ABA structure or linear (AB)nZ structure with n = 2 or radial (AB)n structure or radial (AB)nZ structure with n ≥ 3. Vinyl aromatics for the structure of block A preferably comprise styrene, α-methylstyrene and/or other styrene derivatives. Block A can thus be present as a homopolymer or copolymer. Block A is particularly preferably a polystyrene. Block copolymers of this type form the backbone of the formulation. They form an essential part that influences the adhesive properties and also the tear resistance and thus the release behavior. However, too high a proportion or an unfavorable choice of molecular weight of block copolymers of this type can reduce the adhesive strength. In order to optimally balance these properties, it has been shown that block copolymers of this type should have a peak molecular weight of at least around 100,000 g/mol and at most around 500,000 g/mol. The higher the molecular weight, the more challenging the processability of the material. Therefore, a peak molecular weight of at most 250,000 g/mol is preferred. Linear triblock copolymers or radial block copolymers with a peak molecular weight between 100,000 g/mol and 200,000 g/mol, in particular between 100,000 g/mol and 180,000 g/mol, are very advantageous.

In order to achieve a property profile that meets the requirements, a minimum of 18% by weight of polyvinylaromatics content is selected in the at least one block copolymer of this type. However, this should not be too high, as the adhesive strength is reduced if the proportion is too high. It is advantageous if the polyvinylaromatics content is not higher than 35% by weight. A polyvinylaromatics content of between 20% and 33% by weight is favorable. The proportion of polyvinylaromatics in the hydrogenated polyvinylaromatics-polydiene block copolymers can be determined, for example, by 1H or 13C NMR (nuclear magnetic resonance spectroscopy). The proportion of polyvinylaromatics for commercially available hydrogenated polyvinylaromatic-polydiene block copolymers can also be taken from the manufacturer's instructions.

The hydrogenated polyvinylaromatic polydiene block copolymers used in the pressure-sensitive adhesive composition are preferably those obtained by anionic polymerization and sequential addition of the monomers for the respective polymer blocks, vinylaromatics for the A-blocks and dienes for the B-blocks. In many manufacturing processes, diblock intermediates AB are coupled using a coupling agent Z' to form triblock copolymers (2 AB + Z' -> AB-Z-BA) or radial copolymers. The B-blocks are then selectively hydrogenated, preferably resulting in ethylene and butylene or ethylene and propylene as B-blocks. Block copolymers that are essentially fully hydrogenated with respect to the polydiene blocks (B blocks) are preferably used. The ethylene content in the B blocks is preferably at least 50% by weight.

In order to further improve the property profile of the pressure-sensitive adhesive composition, it has been found to be advantageous if the elastomer component contains up to 40% by weight based on the elastomer component of the at least one type of hydrogenated diblock copolymer.

The polymer blocks defined and contained according to iii. and iv. may differ, for example, in terms of molecular weight and/or composition.

Preferably, the proportion of the hydrogenated diblock copolymer in the elastomer component is not more than 35% by weight, preferably 10 to 30% by weight, in each case based on the total weight of the elastomer component.

Hydrogenated diblock copolymers can be used to advantageously influence the adhesive strength and the flow behavior.

According to preferred embodiments, the elastomer component also contains a further hydrogenated polyvinylaromatic polydiene block copolymer, which is characterized by a linear ABA structure and linear (AB)nZ structure with n = 2 or radial (AB)n structure and radial (AB)nZ structure with n ≥ 3. This block copolymer may have a polyvinyl aromatic content of less than 18% by weight or more and, independently thereof, a peak molecular weight of more than 500,000 g/mol or less than 100,000 g/mol or in between. It may also contain more than one of these types.

### b) Adhesive resin component

The pressure-sensitive adhesive composition also contains an adhesive resin component.

The adhesive resin component is in particular one or more adhesive resins. The adhesive resin component is not to be understood as a reinforcing component, i.e. the adhesive resin component is preferably substantially incompatible with the hard blocks of the polydiene block copolymers.

The adhesive resin or resins are therefore selected so that they are mainly miscible (compatible) with the areas of the pressure-sensitive adhesive composition dominated by the B blocks.

The adhesive resin component is used in particular to adjust the adhesion in the desired manner. According to the general understanding of the skilled person, an "adhesive resin" is an oligomeric or polymeric resin that increases the adhesion, i.e. the inherent tackiness of the pressure-sensitive adhesive composition compared to a pressure-sensitive adhesive composition that does not contain an adhesive resin but is otherwise identical. Adhesive resins are special compounds with a low molecular weight compared to elastomers, usually with a weight-average molecular weight Mw of less than 5,000 g/mol. Typically, the weight average molecular weight of an adhesive resin component used in the present invention is from 400 to 5,000 g/mol, preferably from 500 to 2,000 g/mol, as determined by GPC (Test lb).

The proportion of adhesive resin component in the pressure-sensitive adhesive composition has a positive effect on the bonding strength. Therefore, the adhesive resin content should not be too low. However, it has been shown that too high a proportion of adhesive resin(s) has a negative effect on the thermal shear strength and in particular on the removability. The proportion of the adhesive resin component, based on the total weight of the pressure-sensitive adhesive composition, is preferably 28% to 55% by weight, preferably 35% to 50% by weight.

Preferably, the at least one adhesive resin of the adhesive resin component is selected from the group consisting of resins based on dicyclopentadiene, hydrocarbon resins based on C5, C5/C9 or C9 monomer streams, polyterpene resins based on α-pinene and/or β-pinene and δ-limonene and polymers of pure C8 or C9 aromatics, wherein the resin is partially or, in particular, fully hydrogenated. In the context of the present invention, "partially hydrogenated" is understood to mean a degree of hydrogenation of at least 80%, preferably at least 85%.

### c) Plasticizer component

In addition to the elastomer component and the adhesive resin component, the pressure-sensitive adhesive composition according to the invention may further contain a plasticizer component.

The proportion of plasticizer component, based on the total weight of the pressure-sensitive adhesive composition, is preferably 2 to 25% by weight, particularly preferably 2 to 20% by weight, most preferably 4 to 15% by weight. Surprisingly, it has been shown that even a low plasticizer component content in the quantities mentioned is sufficient to obtain a pressure-sensitive adhesive composition with a sufficiently high bonding strength, which is in contrast to what the prior art teaches, where a plasticizer content of 60 to 95% by weight is assumed in some cases. The plasticizer component is one or more plasticizers.

The plasticizer is preferably selected from the group consisting of ethylene/propylene copolymer, ethylene/butylene copolymer, butylene/iso-butylene (co)-polymer, butylene homopolymer and iso-butylene homopolymer, the amorphous representatives being preferred in each case.

### d) Reinforcing component

The pressure-sensitive adhesive composition may contain a reinforcing component. In the context of the present invention, the reinforcing component is not to be understood as an adhesive resin component, i.e. the reinforcing component is preferably substantially incompatible with the soft blocks, i.e. the polydiene blocks. In particular, so-called end block reinforcers are used as reinforcing components.

End block reinforcers are materials which are essentially compatible with the hard blocks of the polydiene block copolymers. If present tthe reinforcing component is preferably at least one resin based on at least one, in particular aromatic, hydrocarbon compound, which is preferably selected from the group consisting of styrene, alpha-methylstyrene, para-methylstyrene and copolymers thereof.

Although being optional it is preferred to use a reinforcing component. The proportion of the reinforcing component, based on the total weight of the pressure-sensitive adhesive composition, is preferably at least 2.5% by weight and at most 22% by weight, more preferably at least 4% by weight and at most 18% by weight.

In the context of the present invention, the term "essentially incompatible" or "essentially incompatible" means in particular that the ingredients or components mentioned are miscible with each other to a maximum of 10% by weight, preferably to a maximum of 5% by weight.

In the context of the present invention, the term "substantially compatible" is understood in particular to mean that the constituents or components mentioned are miscible with one another to at least 90% by weight, preferably to at least 95% by weight.

### e) Further additives

In order to further adapt the property profile of the pressure-sensitive adhesive composition, further additives can be added to the pressure-sensitive adhesive composition. These are preferably selected from the group consisting of primary antioxidants such as sterically hindered phenols, secondary antioxidants such as phosphites or thioethers, process stabilizers such as C-radical scavengers, light stabilizers such as UV absorbers or sterically hindered amines, processing aids and other elastomers such as those based on pure hydrocarbons such as unsaturated polydienes, natural or synthetically produced polyisoprenes or polybutadienes, chemically essentially saturated elastomers such as saturated ethylene-propylene copolymers, α-olefin copolymers, polyisobutylene, butyl rubber, ethylene-propylene rubber and functionalized hydrocarbons such as halogenated, acrylate-containing or vinyl ether-containing polyolefins. Furthermore, organic or inorganic fillers can be used as well as dyes and color pigments. The pressure-sensitive adhesive can be black, grey, white or colored.

In another particularly suitable embodiment, the self-adhesive product is an adhesive tape. The term "adhesive tape" is well-known and clear to those skilled in the art of adhesive technology. In the context of the present invention, the term "tape" designates all thin, flat structures, i.e. structures with a predominant extension in two dimensions, in particular films, film sections, strips and labels, preferably tapes of extended length and limited width.

In yet another preferred embodiment of the present invention, the pressure-sensitive adhesive layer and the dimensionally stable layer at one end have a protrusion forming a handling flap. This means that in the adhesive bonding stack according to the invention, the pressure-sensitive adhesive layer and the dimensionally stable layer at one end protrude from the first adhesive layer forming a handling flap. In order to perform debonding of the self-adhesive product via the pressure-sensitive adhesive layer, the pressure-sensitive adhesive layer must be stretched extensively. For this, a force must be applied in one direction in the plane of the pressure-sensitive adhesive layer, preferably in the length direction of said layer. This exertion of force is substantially facilitated when a part is provided that allows for an easy pulling. In order to enable easy access, it is helpful if the handling flap protrudes from the self-adhesive product.

In a further preferred embodiment, at the protruding end, the dimensionally stable layer has a perforation or a cut separating the handling flap from the remaining part of the dimensionally stable layer. In the adhesive bonding stack according to the invention, preferably this perforation or a is located where the first adhesive layer terminates. Unlike the pressure-sensitive adhesive layer, which - by nature - upon stretching extends to a relevant degree, the dimensionally stable layer is - as the name suggests - dimensionally stable. It could therefore be an obstacle to extensive stretching and could impede a stretching sufficient to actually result in debonding. With a perforation or cut in the dimensionally stable layer, said obstacle is removed.

Additionally, it is particularly suitable, when, over the length of the handling flap, a passivation layer is provided between the pressure-sensitive adhesive layer and the second substrate.

Thus, in a preferred embodiment, the pressure-sensitive adhesive layer is partially covered by a passivation layer. Whether such a coverage by a passivation layer is desirable depends on the substrate to which the self-adhesive product is applied. In case the pressure-sensitive adhesive adheres to the substrate very well, provision of a passivation layer may be helpful to facilitate the handling in the stretching process and therefore the debonding of the self-adhesive product.

In a further preferred embodiment, said passivation layer is formed by an extension of the dimensionally stable layer. In this embodiment, the dimensionally stable layer does not only cover one side of the protrusion of the pressure-sensitive adhesive layer but is folded over and wrapped around the protrusion so that it also covers its side as well as its bottom side. In combination with the perforation or cut in the dimensionally stable layer, a handling flap which is provided, which enables an easy stretching of the pressure-sensitive adhesive layer.

As pointed out before, with the present invention specific desired functional properties of an adhesive may be combined with the detachability of the self-adhesive product. Many new applications thus become possible.

In addition, another subject of the present invention therefore is the use of the self-adhesive product according to the invention for non-permanent fixation of a battery pack. A detachable fixation of battery packs, e. g. to a cooling plate, is a very important application, as for the first time it enables battery packs to be removed, exchange, repaired or recycled. Yet another subject of the present invention is the use of the self-adhesive product according to the invention in the automotive industry. In the automotive industry very strict requirements with regard to stability of bonding, even under extreme conditions exist. With the present invention it becomes possible to fulfill these requirements while still enabling debonding.

Dependent claims are directed to the above and other useful and advantageous embodiments of the invention. Only particularly expedient and advantageous embodiments and embodying possibilities are described in more detail with reference to the following description of the exemplary embodiments shown in the schematic drawing. Each described individual or detailed design within an exemplary embodiment is to be understood as a structurally independent detailed example for other embodiments and embodiments not or not completely described but covered by the invention.
- Fig. 1: is a schematic depiction of a first embodiment of an adhesive bonding stack by a self-adhesive product according to the invention;
- Fig. 2: is a schematic depiction of an adhesive bonding stack with a second embodiment of a self-adhesive product according to the invention; and
- Fig. 3: is a schematic depiction of an adhesive bonding stack with a third embodiment of a self-adhesive product according to the invention.
- Fig. 4: is a schematic depiction of an adhesive bonding stack with a fourth embodiment of a self-adhesive product according to the invention.

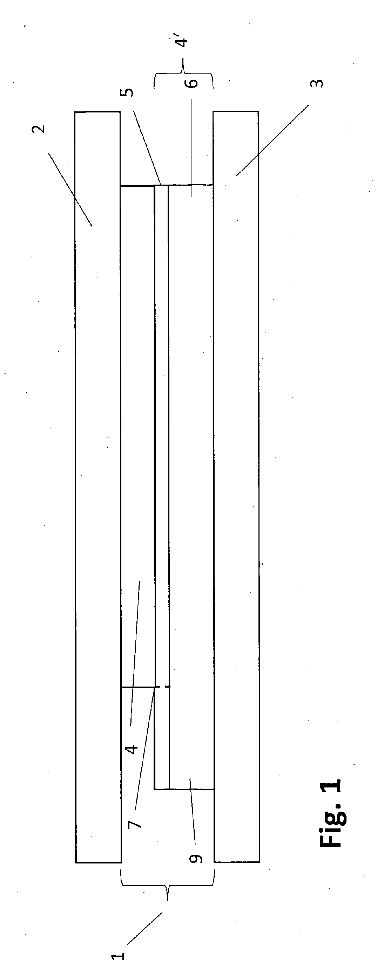

Fig. 1 shows a schematic depiction of an adhesive bonding stack 1 according to the invention. A first substrate 2 and a second substrate 3 are fixed to each other by means of the adhesive bonding stack 1. The adhesive bonding stack 1 is formed by a first adhesive layer 4, which is attached to one side of the first substrate 2 and an adhesive product in the form of a pressure-sensitive adhesive tape 4', which adhesive tape 4' is formed of a dimensionally stable layer 5 and a pressure-sensitive adhesive layer 6. With its second side, the pressure-sensitive adhesive layer 6 is attached to the second substrate 3. On the first side of the pressure-sensitive adhesive layer 6, the dimensionally stable layer 5 is provided. When the adhesive bonding stack 1 is to be detached, the pressure-sensitive adhesive layer 6 is stretched by a handling flap 9 provided on one end of the pressure-sensitive adhesive layer 6 being pulled. The stretched pressure-sensitive adhesive layer 6 is then ripped of the dimensionally stable layer 5. Even though the dimensionally stable layer 5 does not extend upon pulling, it does not hinder an extension of the pressure-sensitive adhesive layer, because a perforation 7 is provided in the dimensionally stable layer 5 at the point where the first adhesive layer 4 ends. This way, the part of the dimensionally stable layer 5 which belongs to the handling flap is separated from the rest of the dimensionally stable layer 5 allowing for the pressure-sensitive adhesive layer 6 to be extended. When the bond is detached, the dimensionally stable layer 5 remains on the first adhesive layer 4.

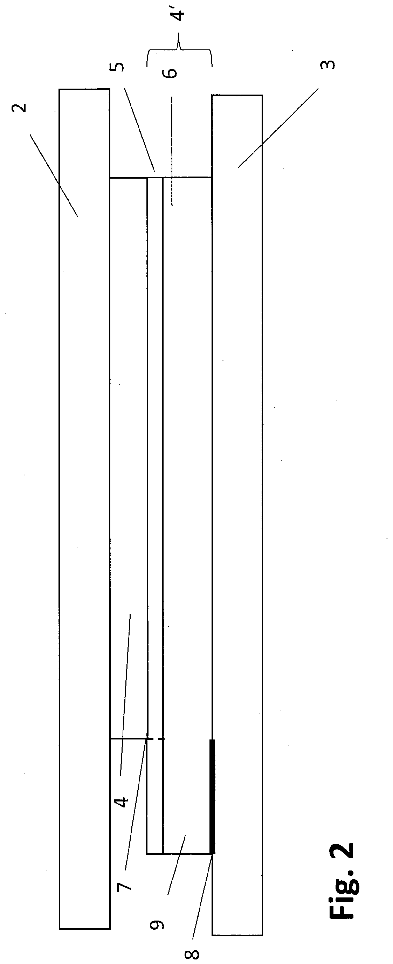

The embodiment of the adhesive bonding stack in Fig. 2 corresponds to the one shown in Fig. 1 with the addition that over the length of the handling flap, a passivation layer 8 is provided between the pressure-sensitive adhesive layer 6 and the second substrate 3. The passivation layer 8 facilitates the handling in the stretching process and therefore the debonding of the pressure-sensitive adhesive tape 1.

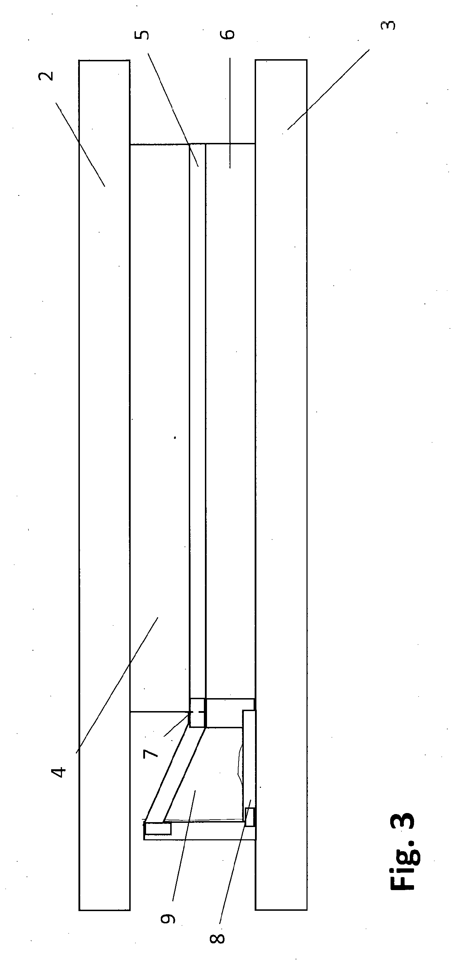

In the embodiment shown in Fig. 3, the passivation layer 8 is formed by an extension of the dimensionally stable layer 5. In this embodiment, the dimensionally stable layer 5 not only covers one side of the handling flap 9 but is folded over and wrapped around the protrusion so that it also covers its side as well as its bottom side. In combination with the perforation 7 in the dimensionally stable layer 5, the thus resulting handling flap 9 allows for an easy stretching of the pressure-sensitive adhesive layer 6.

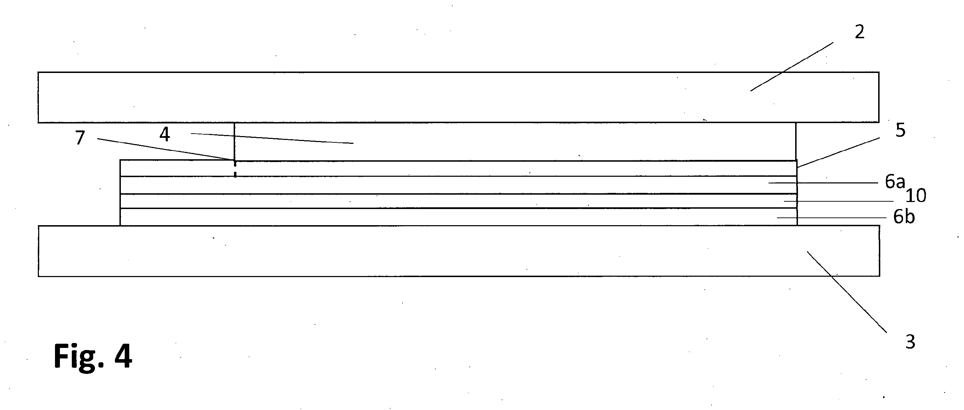

The pressure-sensitive adhesive layer may be a single stretchable adhesive layer. However, it may also .have a more complex design and may consist of two stretchable adhesive layers. In the embodiment shown in Fig. 4, two stretchable pressure-sensitive adhesive layers 6a and 6b separated by a carrier layer 10, the carrier layer being made of an extensible carrier material.

### Examples:

### Test methods

Unless explicitly stated otherwise, the measurements are carried out in a test climate of 23 ± 1 °C and 50 ± 5 % relative humidity.

### Test method 1 - Adhesive strength steel

The determination of the adhesive strength (according to AFERA 5001) is carried out as follows. A polished steel plate with a thickness of 2 mm is used as a defined adhesive base. The bondable surface element to be tested (50 µm pressure-sensitive adhesive layer on 36 µm etched polyester film) is cut to a width of 20 mm and a length of approx. 25 cm, unless otherwise specified, provided with a handling section and then immediately pressed five times with a steel roller of 4 kg at a feed rate of 10 m/min onto the selected adhesive base. Immediately afterwards, the bondable surface element is pulled off the adhesive base at an angle of 180° using a tensile tester (Zwick) at a speed of v = 300 mm/min and the force required for this is measured at room temperature. The measured value (in N/cm) is the average of three individual measurements.

### Test method 2 - Adhesive strength PP/EPR

The adhesive strength (according to AFERA 5001) is determined as follows. A PP/EPR sheet with a thickness of 2 mm is used as a defined adhesive base. The bondable surface element to be tested (50 µm pressure-sensitive adhesive layer on 36 µm etched polyester film) is cut to a width of 20 mm and a length of approximately 25 cm, provided with a handling section and then immediately pressed five times onto the selected adhesive substrate using a 4 kg steel roller at a feed rate of 10 m/min. Immediately afterwards, the bondable surface element is pulled off the adhesive base at an angle of 180° using a tensile tester (Zwick) at a speed of v = 300 mm/min and the force required for this is measured at room temperature. The measured value (in N/cm) is the average of three individual measurements.

The test substrate in this case is a PP/EPR sheet. Hifax TRC 135X/4 Black from LyondellBasell is used as the base material for the PP/EPR sheets.

### Test method 3 - SAFT

This test is used to quickly test the shear strength of adhesive formulations under temperature stress. For this purpose, a test sample to be tested is bonded to a temperature-controlled steel plate, loaded with a weight (200 g) and the shear distance recorded.

Test sample preparation:
The test sample to be examined (50 µm transfer tape is glued to a 50 µm thick aluminum foil with one of the adhesive sides, unless otherwise specified. The test sample prepared in this way is cut to a size of 10 mm * 50 mm.

The cut adhesive tape sample is bonded with the other adhesive side to a polished, acetone-cleaned test plate (material 1.4301, DIN EN 10088-2, surface 2R, surface roughness Ra = 30 to 60 nm, dimensions 50 mm * 13 mm * 1.5 mm) in such a way that the bonding surface of the sample is height * width = 13 mm * 10 mm and protrudes 2 mm beyond the top edge of the test plate. A 2 kg steel roller is then rolled over six times at a speed of 10 m/min to fix it in place. The top of the sample is reinforced flush with a stable adhesive strip, which serves as a support for the displacement sensor. The sample is then suspended by means of the plate in such a way that the longer protruding end of the test sample points vertically downwards.

Measurement:
The sample to be measured is loaded with a weight of 200 g at the lower end. The test plate with the bonded sample is heated to the final temperature of 200 °C at a rate of 9 K/min, starting at 25 °C.

The slip path of the sample is observed as a function of temperature and time using a displacement sensor. The maximum slip distance is set at 1000 µm (1 mm); if this is exceeded, the test is aborted and the failure temperature is recorded. Test climate: room temperature 23 +/- 3 °C, relative humidity 50 +/- 5%. The result is the average of two individual measurements and is given in °C.

### Test method 4 - Tear resistance

Adhesive tape samples were produced for the tear resistance tests as follows: Ten strips, each 10 mm wide and 40 mm long, were punched from the adhesive tape to be tested. These strips are glued to a polycarbonate sheet conditioned with ethanol over a length of 30 mm, so that a 10 mm long handling flap protrudes. A PET film (Hostaphan RN50, Mitsubishi Chemical Group) with a thickness of 50 µm is laminated onto the other side of the adhesive strips. the bond is rolled over 10 times with a 4 kg roller (five times back and forth). After a mounting time of 24 hours, the strips are manually stripped from the adhesive joint at a 180° angle.

The number of samples that can be removed without leaving any residue is evaluated. Tear resistance is specified as a percentage with regard to torn adhesive strips. 0 % corresponds to the case where none of 10 adhesive strips is torn during the removal test performed by stretching. 80 % corresponds to the case where 8 of 10 adhesive strips are torn during the removal test carried out by stretching.

### Manufacturing of self-adhesive product

40.0 wt.-% Kraton G1654, 10.0 wt.-% Kraton G1726, 5.0 wt.-% Kraton G1750 (all Kraton Corp.) and 45.0 wt.-% Eastotac H100W (Eastman Chemical) were dissolved in a solvent mixture of benzine (boiling point range 60/95) /toluene/acetone with a solids content of 30 wt.-% and spread with a coating bar on a PET film (thickness: 50 µm) equipped with a separating silicone in a layer thickness of 1 µm, then the solvent was evaporated off at 100 °C for 15 min, thus drying the adhesive layer.

### Results

The following results were obtained:

| | |
|---|---|
| Adhesive strength steel: | 5.5 N/cm |
| Adhesive strength PP/EPR: | 3.6 N/cm |
| SAFT (200 g): | 171.5 °C |
| Tear resistance: | 0% |

## Claims

1. Adhesive bonding stack between a first substrate (2) and a second substrate (3), formed by
- a first adhesive layer (4), which is double-sidedly adhering and non-detachable, the first side of the first adhesive layer (4) being attached to the first substrate (2), **characterized in that** the adhesive bonding stack further comprises a self-adhesive product which comprises
- a dimensionally stable layer (5) provided on the second side of the first adhesive layer (4),
- a pressure-sensitive adhesive layer (6) provided on a second side of the dimensionally stable layer (5), which is opposite to the first adhesive layer (4), the second side of the pressure-sensitive adhesive layer (6) being attached to the second substrate (3), the pressure-sensitive adhesive layer (6) being an adhesive moiety detachable by stretching,
rendering the adhesive bonding stack detachable.

2. Adhesive bonding stack according to claim 1, wherein the adhesive of the first adhesive layer (4) is a functional adhesive, in particular an adhesive which is thermally conductive.

3. Adhesive bonding stack according to claim 1 or 2, wherein the dimensionally stable layer (5) consists of at least one material selected from the group consisting of metal foils, particularly aluminum foil, copper foil, tin foil or lead foil, polypropylene, vinyl chloride resin, polystyrene, polyurethane, polyethylene terephthalate, acrylonitrile butadiene styrene, polycarbonate, polyvinyl chloride, ethylene vinyl acetate, polyester and paper, preferably selected from the group consisting of polypropylene, polyethylene terephthalate, polycarbonate and polyvinyl chloride.

4. Adhesive bonding stack according to at least one of claims 1 to 3, wherein the adhesive of the first adhesive layer (4) is a structural adhesive, particularly a liquid adhesive or an adhesive paste.

5. Adhesive bonding stack according to at least one of claims 1 to 4, wherein the first substrate (2) is at least one battery cell, and the second substrate (3) is a battery cooling plate.

6. Self-adhesive product (1), comprising
- a pressure-sensitive adhesive layer (6), which is double-sidedly adhering and detachable by stretching, and
- a dimensionally stable layer (5) provided on a first side of the pressure-sensitive adhesive layer (6),
- optionally a temporary liner on the second side of the pressure-sensitive adhesive layer (6),
for use in the adhesive bonding stack according to at least one of claims 1 to 5.

7. Self-adhesive product (1) according to claim 6, wherein the dimensionally stable (5) layer consists of at least one material selected from the group consisting of metal foils, particularly aluminum foil, copper foil, tin foil or lead foil, polypropylene, vinyl chloride resin, polystyrene, polyurethane, polyethylene terephthalate, acrylonitrile butadiene styrene, polycarbonate, polyvinyl chloride, ethylene vinyl acetate, polyester and paper, preferably selected from the group consisting of polypropylene, polyethylene terephthalate, polycarbonate and polyvinyl chloride.

8. Self-adhesive product (1) according to claim 6 or 7, wherein the dimensionally stable layer (5) has a thickness of between 10 and 150 µm.

9. Self-adhesive product (1) according to at least one of claims 6 to 8, wherein the pressure-sensitive adhesive layer has a thickness of between 100 and 500 µm.

10. Self-adhesive product (1) according to at least one of claims 6 to 9, wherein the adhesive product (1) is an adhesive tape.

11. Self-adhesive product (1) according to at least one of claims 6 to 10, wherein the pressure-sensitive adhesive layer (6) and the dimensionally stable layer (5) at one end have a protrusion forming a handling flap (9).

12. Self-adhesive product (1) according to claim 11, wherein, on the protruding end, the dimensionally stable layer (5) has a perforation or a cut (7) separating the handling flap (9) from the remaining part of the dimensionally stable layer (5).

13. Self-adhesive product according to claim 11 or 12, wherein, over the length of the handling flap (9), a passivation layer (8) is provided between the pressure-sensitive adhesive layer (6) and the second substrate (3).

14. Self-adhesive product (1) according to claim 13, wherein the passivation layer (8) is formed by an extension of the dimensionally stable layer (5).

15. Use of the self-adhesive product (1) according to at least one of claims 6 to 14 for non-permanent fixation of battery cells to a cooling plate.

16. Use of the self-adhesive product (1) according to at least one of claims 6 to 14 in the automotive industry.
